# FASCICULE DE BREVET EUROPEEN

(11) **EP 3 819 768 B1**
(45) Date de publication et mention de la délivrance du brevet: **29.07.2026**
(21) Numéro de dépôt: 20205723.8
(22) Date de dépôt: 04.11.2020
(51) Int. Cl.: G06F 11/07

(54) **DISPOSITIF DE SURVEILLANCE DE L'EXÉCUTION D'UNE APPLICATION, ENSEMBLE ET SYSTÈME AVIONIQUE ASSOCIÉS**
VORRICHTUNG ZUR ÜBERWACHUNG EINER ANWENDUNGSAUSFÜHRUNG, ENTSPRECHENDE EINHEIT UND ENTSPRECHENDES FLUGZEUGSYSTEM
DEVICE FOR MONITORING THE EXECUTION OF AN APPLICATION, ASSOCIATED ASSEMBLY AND AVIONICS SYSTEM

(30) Priorité: 08.11.2019 FR 1912551
(43) Date de publication de la demande: 12.05.2021
(73) Titulaire: THALES, 92400 Courbevoie (FR)
(72) Inventeur: SANDERSON, Gordon, 33700 CS50108 MERIGNAC (FR); BALIHAUT, Cédric, 33700 CS50108 MERIGNAC (FR); DUMERCQ, Philippe, 33700 CS50108 MERIGNAC (FR)
(74) Mandataire: Lavoix

(56) Documents cités:
- EP-A1- 2 624 139
- US-A1- 2014 013 150
- US-B1- 6 292 045

## Description

La présente invention concerne un dispositif de surveillance de l'exécution d'une application sur un processeur. La présente invention concerne, en outre, un ensemble comprenant un processeur et un tel dispositif de surveillance. La présente invention concerne aussi un système avionique associé.

Dans le domaine avionique, des dispositifs de surveillance, aussi appelés chien de garde (en anglais « watchdog »), sont utilisés pour contrôler le fonctionnement de systèmes critiques.

De tels dispositifs de surveillance sont des circuits électroniques ou logiciels permettant de vérifier le bon fonctionnement de l'exécution temps réel d'une application sur un processeur. Pour cela, une séquence prédéterminée est, par exemple, rafraîchie périodiquement dans une fenêtre temporelle prédéterminée suite à la réception d'instructions. Lorsqu'aucune instruction n'est reçue dans la fenêtre temporelle prédéterminée, la séquence prédéterminée n'est pas rafraichie et une alerte est lancée. Le principe d'un tel dispositif de surveillance est, qu'une fois enclenché, il ne peut plus être débrayé par le processeur qu'il contrôle et ce, pour s'affranchir d'un mauvais fonctionnement du processeur ou des applications exécutées par le processeur.

Les systèmes avioniques et, en particulier les systèmes basés sur la plateforme processeur IMA (de l'anglais « Integrated Modular Avionic » traduit en français par « Avionique Modulaire Intégrée »), sont basés sur des exécutions périodiques dans des fenêtres de temps donné. Une telle plateforme est notamment susceptible de synchroniser la planification en temps réel du système d'exploitation sur une source de synchronisation externe.

Or, il est préférable que la synchronisation sur des sources externes de synchronisation soit robuste à la perte et au retour de la source de synchronisation.

Dans les systèmes connus, en cas de perte de la synchronisation externe, le dispositif de surveillance émet une alerte qui provoque une défaillance fatale du processeur et entraîne la réinitialisation du processeur dans un mode de synchronisation interne. En effet, les dispositifs de surveillance actuels, une fois armés, se déclenchent au changement de référence de synchronisation pour le réarmement car, soit la fréquence de réarmement n'est pas conservée, soit le réarmement se passe en dehors de la fenêtre temporelle définie.

Des dispositifs de surveillance sont connus des documents US 2014/013150 A1 et EP 2 624 139 A1. En particulier, le dispositif de surveillance connu de US2014/013150 A1 comprend un compteur de temps et un module de contrôle du compteur de temps, le module de contrôle étant configuré pour réinitialiser le compteur de temps à la fin d'une période temporelle de durée prédéterminée, dite période de réinitialisation, si une commande de réinitialisation a été reçue en entrée du dispositif de surveillance dans une fenêtre temporelle de durée prédéterminée, dite fenêtre de réinitialisation, et pour générer une commande de sanction du processeur dans le cas contraire.

Il existe donc un besoin pour un dispositif de surveillance permettant de contrôler de manière fiable un processeur même lors d'un changement de la source de synchronisation du processeur.

A cet effet, l'invention a pour objet un dispositif de surveillance de l'exécution d'une application sur un processeur selon la revendication 1.

Selon d'autres aspects avantageux de l'invention, le dispositif de surveillance est selon l'une des revendications 2 à 5.

L'invention concerne, en outre, un ensemble selon la revendication 6.

Selon d'autres aspects avantageux de l'invention, l'ensemble est selon la revendication 7 ou 8.

L'invention concerne aussi un système avionique selon la revendication 9.

D'autres caractéristiques et avantages de l'invention apparaîtront à la lecture de la description qui suit de modes de réalisation de l'invention, donnée à titre d'exemple uniquement, et en référence aux dessins qui sont :
- [Fig 1] figure 1, une représentation schématique d'un processeur et d'un dispositif de surveillance du processeur, et
- [Fig 2] figure 2, une représentation schématique d'un exemple de resynchronisation, sur une source de synchronisation externe, d'un ensemble comprenant un processeur et un dispositif de surveillance.

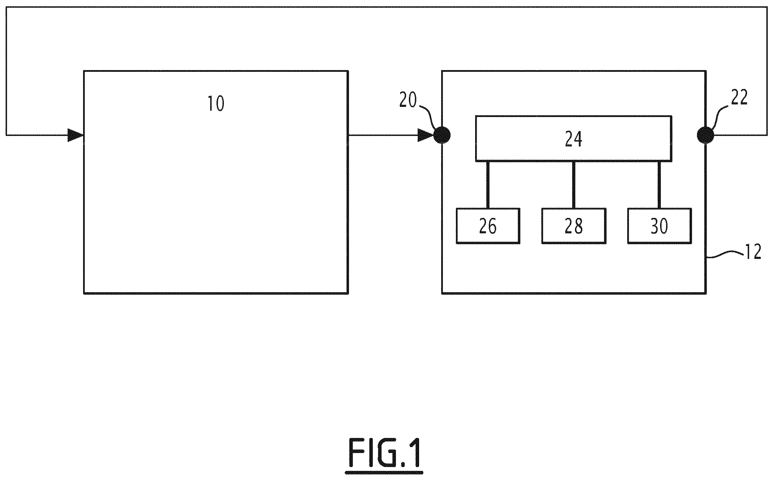

Un processeur 10 et un dispositif 12 de surveillance du processeur 10 sont illustrés par la figure 1. L'ensemble formé du processeur 10 et du dispositif de surveillance 12 est, par exemple, adapté pour être mis en œuvre dans un système avionique, par exemple dans la plateforme IMA d'un système avionique.

Le processeur 10 est un calculateur configuré pour exécuter des programmes logiciels aussi appelés applications. Le processeur 10 est en interaction avec un système d'exploitation. Le système d'exploitation est un programme logiciel qui contrôle l'utilisation des ressources du processeur par les applications.

Avantageusement, le processeur 10 est un microprocesseur.

Dans un exemple, le processeur 10 est configuré pour être synchronisé sur une source de synchronisation externe.

La source de synchronisation externe du processeur 10 est, par exemple, une source de synchronisation interne d'un autre processeur appartenant au même équipement ou à un équipement différent du processeur 10, ou une source de synchronisation interne d'un dispositif d'affichage (dont la synchronisation permet par exemple le rafraîchissement de trames vidéos à afficher), ou encore une source de synchronisation d'un réseau avionique.

En variante, le processeur 10 est configuré pour être synchronisé au cours du temps sur plusieurs sources de synchronisation différentes, notamment sur des sources de synchronisation internes et/ou externes.

Le système d'exploitation du processeur 10 est configuré pour mettre en veille la ou les applications exécutées sur le processeur 10 à chaque fois que la source de synchronisation courante du processeur 10 est remplacée par une source de synchronisation externe différente de la source de synchronisation courante, et ce jusqu'à ce que le processeur 10 se synchronise sur ladite source de synchronisation externe. La source de synchronisation externe présente notamment une période identique à la source de synchronisation courante et une phase (ou retard) éventuellement différente de la source de synchronisation courante. La synchronisation consiste à compenser cette différence de phase (ou retard).

Le système d'exploitation est, en outre, configuré pour envoyer une commande d'inhibition au dispositif de surveillance, parallèlement à la mise en veille des applications, et une commande de réactivation au dispositif de surveillance une fois le processeur 10 synchronisé sur ladite source de synchronisation externe (donc à l'issue de la période de veille des applications). De telles commandes seront décrites dans la suite de la description.

Le dispositif de surveillance 12 est configuré pour surveiller l'exécution d'applications sur le processeur 10. Le dispositif de surveillance 12 comprend une entrée 20, une sortie 22, un compteur de temps 24, un module de contrôle 26, un module d'inhibition 28 et un module de réactivation 30.

L'entrée 20 du dispositif de surveillance 12 est connectée à une sortie 22 du processeur 10.

L'entrée 20 du dispositif de surveillance 12 est propre à recevoir des commandes d'entrée en provenance du processeur 10. De telles commandes d'entrée sont générées par le système d'exploitation du processeur 10.

Chaque commande d'entrée est une séquence d'instructions. Les commandes d'entrée sont avantageusement choisies parmi : une commande de réinitialisation, une commande d'inhibition et une commande de réactivation. Une commande de réinitialisation, aussi appelée commande de réarmement, est une commande visant à réinitialiser le compteur de temps 24 du dispositif de surveillance 12. Une commande d'inhibition est une commande visant à inhiber le compteur de temps 24 du dispositif de surveillance 12. Une commande de réactivation est une commande visant à réactiver le compteur de temps 24 du dispositif de surveillance 12 lorsque celui-ci a été inhibé au préalable.

La sortie 22 du dispositif de surveillance 12 est connectée à une entrée 20 du processeur 10.

La sortie 22 du dispositif de surveillance 12 est propre à envoyer des commandes de sanction du processeur 10. Les commandes de sanction sont générées par le module de contrôle 26. Les commandes de sanction sont des commandes indicatives d'un défaut de fonctionnement du processeur 10 (défaut matériel) et/ou de l'application (défaut logiciel).

Les commandes de sanction sont destinées à enclencher une action telle qu'une interruption du processeur 10, une mise hors service du processeur 10 ou encore un redémarrage du processeur 10.

Le compteur de temps 24 est configuré pour définir des périodes temporelles.

Le compteur de temps 24 est, par exemple, réalisé sous une forme logicielle.

En variante, le compteur de temps 24 est réalisé sous la forme d'un circuit électronique. Le circuit électronique comprend, par exemple, au moins une bascule monostable.

Le module de contrôle 26 est configuré pour réinitialiser, c'est-à-dire remettre à zéro ou réarmer, le compteur de temps 24 à la fin d'une période temporelle de durée prédéterminée, dite période de réinitialisation Pᵢₙᵢₜ, si une commande de réinitialisation a été reçue en entrée 20 du dispositif de surveillance 12 dans une fenêtre temporelle de durée prédéterminée, dite fenêtre de réinitialisation Fᵢₙᵢₜ. La période de réinitialisation Pᵢₙᵢₜ est donc la période entre deux réinitialisations consécutives. La fenêtre de réinitialisation Fᵢₙᵢₜ est la marge d'erreur autour du moment de réinitialisation théorique. La fenêtre de réinitialisation Fᵢₙᵢₜ est comprise dans la période de réinitialisation Pᵢₙᵢₜ. Dans le cas contraire, le module de contrôle 26 est configuré pour générer une commande de sanction du processeur 10.

La durée de la période de réinitialisation Pᵢₙᵢₜ est prédéterminée lors de la configuration du dispositif de surveillance 12, c'est-à-dire avant sa mise en service. De même, la durée, le début et la fin de la fenêtre de réinitialisation Fᵢₙᵢₜ sont prédéterminées lors de la configuration du dispositif de surveillance 12.

Dans un premier exemple, la durée de la fenêtre de réinitialisation Fᵢₙᵢₜ est strictement inférieure à la durée de la période de réinitialisation Pᵢₙᵢₜ. Dans ce cas, le dispositif de surveillance 12 est communément appelé « chien de garde à fenêtre temporelle ». Avantageusement, la fin de la fenêtre de réinitialisation Fᵢₙᵢₜ est égale à la fin de la période de réinitialisation Pᵢₙᵢₜ.

Dans un deuxième exemple, la durée de la fenêtre de réinitialisation Fᵢₙᵢₜ est égale à la durée de la période de réinitialisation Pᵢₙᵢₜ. Dans ce cas, la réinitialisation du compteur de temps 24 est effectuée quel que soit l'instant de réception de la commande de réinitialisation dans la période de réinitialisation Pᵢₙᵢₜ.

La commande de réarmement du compteur de temps 24 est susceptible d'être reçue à chaque instant de la période de réinitialisation Pᵢₙᵢₜ.

Avantageusement, le module de contrôle 26 est aussi configuré pour générer des commandes de sanction dans au moins un autre cas d'espèce qui est décrit dans la suite de la description.

Le module d'inhibition 28 est configuré pour inhiber le compteur de temps 24 lors de la réception d'une commande d'inhibition en entrée 20 du dispositif de surveillance 12. Par le terme « inhiber le compteur de temps », il est entendu arrêter le compteur de temps 24 sans le réinitialiser.

Avantageusement, le module d'inhibition 28 est configuré pour inhiber le compteur de temps 24 seulement lorsque le nombre de commandes d'inhibition reçues sur une période glissante de durée prédéterminée est inférieur ou égale à un nombre maximal. Cela permet de contrôler le nombre de demandes d'inhibition par unité de temps. De préférence, lorsque le nombre de commandes d'inhibition reçues sur la période glissante est strictement supérieur au nombre maximal, le module de contrôle 26 est configuré pour générer une commande de sanction du processeur 10.

La durée de la période glissante et le nombre maximal sont prédéterminés lors de la configuration du dispositif de surveillance 12. Le nombre maximal est supérieur ou égal à zéro.

Le module de réactivation 30 est configuré pour réactiver le compteur de temps 24 lors de la réception d'une commande de réactivation en entrée 20 du dispositif de surveillance 12. Par le terme « réactiver », il est entendu que le compteur de temps 24 reprend le comptage du temps à partir du moment où il a été inhibé. Le compteur de temps 24 n'est donc pas remis à zéro.

Le module de réactivation 30 est, en outre, configuré pour réactiver le compteur de temps 24 lorsque la durée d'inhibition du compteur de temps 24 est strictement supérieure à une durée maximale d'inhibition. Cela permet de s'assurer que la désactivation du compteur de temps 24 est temporaire : c'est-à-dire que la durée de l'inhibition est bornée (réarmement automatique après un temps défini à la configuration).

La durée maximale d'inhibition est prédéterminée lors de la configuration du dispositif de surveillance 12. Par exemple, la durée maximale d'inhibition est inférieure ou égale à deux fois la durée prédéterminée de la période de réinitialisation Pᵢₙᵢₜ.

Le fonctionnement de l'ensemble formé du processeur 10 et du dispositif de surveillance 12 va maintenant être décrit.

Initialement, le compteur de temps 24 du dispositif de surveillance 12 est mis à zéro.

Lorsqu'une commande de réinitialisation est reçue en entrée 20 du dispositif de surveillance 12 et que ladite commande est reçue dans la fenêtre de réinitialisation Fᵢₙᵢₜ, le module de contrôle 26 réinitialise le compteur de temps 24 à la fin de la période de réinitialisation Pᵢₙᵢₜ. Dans le cas contraire, c'est-à-dire si la commande de réinitialisation n'a pas été reçue dans la fenêtre de réinitialisation Fᵢₙᵢₜ ou si aucune commande de réinitialisation n'a été reçue, le module de contrôle 26 génère une commande de sanction du processeur 10. Cette commande de sanction est envoyée en sortie 22 du dispositif de surveillance 12.

Lorsqu'une commande d'inhibition est reçue en entrée 20 du dispositif de surveillance 12, le module d'inhibition 28 inhibe le compteur de temps 24. Avantageusement, une telle inhibition a lieu seulement si une condition relative au nombre de commandes d'inhibition reçues sur une période glissante est remplie. Avantageusement, lorsque cette condition n'est pas remplie, le module de contrôle 26 génère une commande de sanction du processeur 10.

Lorsqu'une commande de réactivation est reçue en entrée 20 du dispositif de surveillance 12, le module de réactivation 30 réactive le compteur de temps 24. Avantageusement, lorsque la durée d'inhibition du compteur de temps 24 est strictement supérieure à une durée maximale d'inhibition, en l'absence de commande de réactivation, le module de réactivation 30 réactive le compteur de temps 24. Optionnellement, le module de contrôle 26 génère une commande de sanction du processeur 10 lorsque le module de réactivation 30 réactive le processeur 10 en l'absence de commande de réactivation.

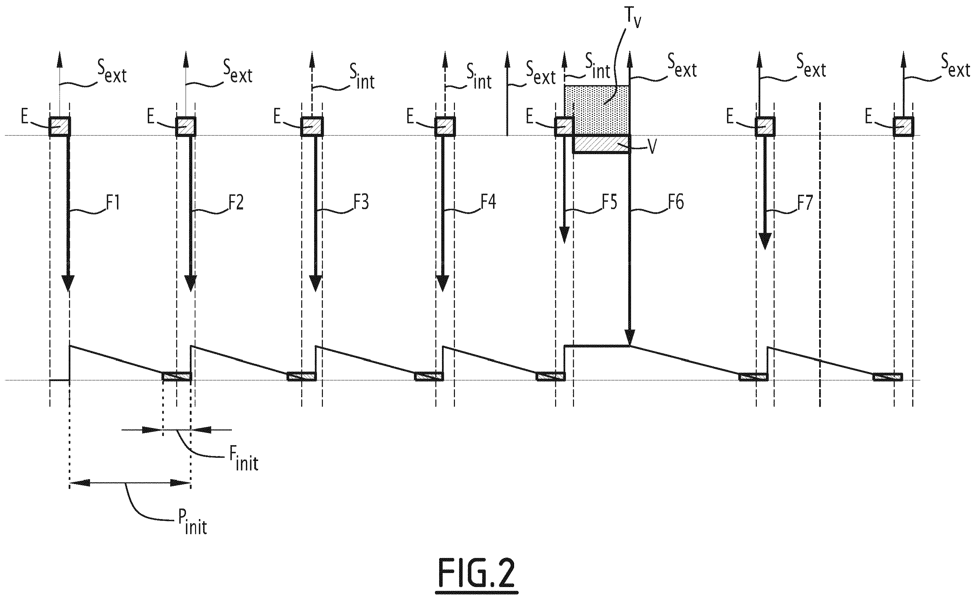

L'exemple de la figure 2 illustre le fonctionnement de l'ensemble formé du processeur 10 et du dispositif de surveillance 12 dans le cas de la perte d'une synchronisation externe, suivi du retour de cette synchronisation externe.

Sur cette figure 2, les différentes synchronisations sont matérialisées par des flèches pointant vers le haut. Notamment, les flèches Sₑₓₜ en traits pleins illustrent la synchronisation du processeur 10 sur une source de synchronisation externe et les flèches Sᵢₙₜ en traits pointillés illustrent la synchronisation du processeur 10 sur une source de synchronisation interne.

La ligne du dessus de la figure 2 illustre l'exécution d'une application sur le processeur 10 au cours du temps. Dans cet exemple, le compteur de temps 24 effectue un décompte. L'exécution est matérialisée par les carrés hachurés E. La mise en veille de l'application due à un changement de synchronisation est matérialisée par un rectangle hachuré V. La durée pour que le processeur 10 se resynchronise sur la source de synchronisation externe à partir de la réapparition de cette source externe est notée Tv et est matérialisée par un rectangle avec des pointillées.

Au cours de son exécution, le système d'exploitation du processeur 10 envoie des commandes au processeur 10. Ces commandes sont matérialisées par des flèches en gras. Notamment, les flèches F1, F2, F3, F4 et F7 matérialisent chacune une commande de réinitialisation. La flèche F5 matérialise une commande d'inhibition. La flèche F6 matérialise une commande de réactivation.

La ligne du dessous de la figure 2 illustre le fonctionnement du compteur de temps 24 du dispositif de surveillance 12. Comme visible sur cette figure, en fonctionnement normal (commandes de réinitialisation F2, F3, F4 et F7 reçues dans la fenêtre de réinitialisation Fᵢₙᵢₜ), le compteur de temps 24 est décrémenté jusqu'à la fin de la période de réinitialisation Pᵢₙᵢₜ. Lorsque le dispositif de surveillance 12 reçoit une commande d'inhibition F5, le compteur de temps 24 est inhibé. Lorsque le dispositif de surveillance 12 reçoit une commande de réactivation F6, le compteur de temps 24 est réactivé.

Ainsi, dans cet exemple, initialement, le processeur 10 est synchronisé sur une source de synchronisation externe Sₑₓₜ. Le système d'exploitation du processeur 10 envoie alors les commandes de réinitialisation F1 et F2 au dispositif de surveillance 12 pour réarmer le compteur de temps 24. A la perte de la synchronisation externe, le processeur 10 se resynchronise sur une source de synchronisation interne Sᵢₙₜ. Cela n'entraîne pas de changement du point de vue du processeur 10 et de la date d'envoi des commandes de réinitialisation F3 et F4. A la réapparition de la source de synchronisation externe Sₑₓₜ, l'application est mise en veille jusqu'à ce que le processeur 10 se resynchronise sur la source de synchronisation externe réapparue. En parallèle de la mise en veille de l'application, le processeur 10 envoie une commande d'inhibition F5 au dispositif de surveillance 12, ce qui a pour conséquence l'inhibition du compteur de temps 24. A l'issue de la mise en veille de l'application, c'est-à-dire une fois que le processeur 10 est resynchronisé sur la source de synchronisation externe, le système d'exploitation du processeur 10 envoie une commande de réactivation F6 au dispositif de surveillance 12.

Ainsi, le dispositif de surveillance 12 est configuré pour s'adapter à différentes situations rencontrées par une application s'exécutant sur un processeur 10, et notamment la perte de la synchronisation externe du processeur 10. Un tel dispositif de surveillance 12 permet de changer de moment de synchronisation de l'application sans se déclencher et provoquer de sanctions. Cela permet de contrôler de manière fiable un processeur 10 même lors d'un changement de la source de synchronisation du processeur 10.

En outre, le contrôle du nombre d'inhibitions demandées et de la durée d'inhibition permet de contrôler le fonctionnement du dispositif de surveillance 12, indépendamment des commandes en provenance du processeur 10, ce qui permet de conserver la sûreté du dispositif de surveillance 12. Les actions de resynchronisation sont donc transitoires, ce qui permet de conserver la sûreté et de garantir l'indépendance du dispositif de surveillance 12 vis-à-vis du processeur 10.

Ainsi, avec un tel dispositif de surveillance 12, le principe « d'exception » de resynchronisation n'est pas le mode de fonctionnement normal, et l'indépendance de fonctionnement du dispositif de surveillance 12 est conservée tout comme ses capacités de détection de défauts logiciels. Un tel dispositif de surveillance 12 est donc tout à fait adapté pour être utilisé dans des systèmes avioniques et, notamment, être certifiable suivant la norme DO254.

L'homme du métier comprendra que les modes de réalisation décrits précédemment sont susceptibles d'être combinés entre eux lorsqu'une telle combinaison est compatible.

## Revendications

1. Dispositif (12) de surveillance de l'exécution d'une application sur un processeur (10), le dispositif comprenant :
- une entrée (20) pour la réception de commandes d'entrée en provenance du processeur (10), chaque commande d'entrée étant choisie parmi : une commande de réinitialisation, une commande d'inhibition et une commande de réactivation,
- une sortie (22) pour l'envoi d'une commande de sanction du processeur (10),
- un compteur de temps (24),
- un module de contrôle (26) du compteur de temps (24), le module de contrôle (26) étant configuré pour réinitialiser le compteur de temps (24) à la fin d'une période temporelle de durée prédéterminée, dite période de réinitialisation (Pᵢₙᵢₜ), si une commande de réinitialisation a été reçue en entrée (20) du dispositif de surveillance (12) dans une fenêtre temporelle de durée prédéterminée, dite fenêtre de réinitialisation (Fᵢₙᵢₜ), et pour générer une commande de sanction du processeur (10) dans le cas contraire,
- un module d'inhibition (28) du compteur de temps (24), le module d'inhibition (28) étant configuré pour inhiber le compteur de temps (24) lors de la réception d'une commande d'inhibition en entrée (20) du dispositif de surveillance (12), et
- un module de réactivation (30) du compteur de temps (24), le module de réactivation (30) étant configuré pour réactiver le compteur de temps (24) lors de la réception d'une commande de réactivation en entrée (20) du dispositif de surveillance (12),
le module de réactivation (30) étant, en outre, configuré pour réactiver le compteur de temps (24) lorsque la durée d'inhibition du compteur de temps (24) est strictement supérieure à une durée maximale d'inhibition.

2. Dispositif (12) selon la revendication 1, dans lequel le module d'inhibition (28) est configuré pour inhiber le compteur de temps (24) seulement lorsque le nombre de commandes d'inhibition reçues sur une période glissante de durée prédéterminée est inférieur ou égale à un nombre maximal.

3. Dispositif (12) selon la revendication 2, dans lequel lorsque le nombre de commandes d'inhibition reçues sur la période glissante est strictement supérieur au nombre maximal, le module de contrôle (26) est configuré pour générer une commande de sanction du processeur (10).

4. Dispositif (12) selon l'une quelconque des revendications 1 à 3, dans lequel la durée de la fenêtre de réinitialisation (Fᵢₙᵢₜ) est égale à la durée de la période de réinitialisation (Pᵢₙᵢₜ).

5. Dispositif (12) selon l'une quelconque des revendications 1 à 3, dans lequel la durée de la fenêtre de réinitialisation (Fᵢₙᵢₜ) est strictement inférieure à la durée de la période de réinitialisation (Pᵢₙᵢₜ), avantageusement la fin de la fenêtre de réinitialisation (Fᵢₙᵢₜ) étant égale à la fin de la période de réinitialisation (Pᵢₙᵢₜ).

6. Ensemble comprenant :
- un processeur (10) configuré pour exécuter une application, et
- un dispositif de surveillance (12) de l'exécution de l'application sur le processeur (10) selon l'une quelconque des revendications 1 à 5.

7. Ensemble selon la revendication 6, dans lequel le processeur (10) est en interaction avec un système d'exploitation, le processeur (10) étant configuré pour être synchronisé au cours du temps sur au moins une source de synchronisation externe (Sₑₓₜ), à chaque fois que la source de synchronisation courante du processeur (10) est remplacée par une source de synchronisation externe (Sₑₓₜ) différente de la source de synchronisation courante, le système d'exploitation étant configuré pour mettre en veille la ou les applications exécutées par le processeur jusqu'à ce que le processeur (10) se resynchronise sur ladite source de synchronisation externe (Sₑₓₜ), le système d'exploitation étant, en outre, configuré pour envoyer une commande d'inhibition au dispositif de surveillance (12) parallèlement à la mise en veille de la ou des applications et une commande de réactivation au dispositif de surveillance (12) une fois que le processeur est resynchronisé sur la source de synchronisation externe (Sₑₓₜ).

8. Ensemble selon la revendication 7, dans lequel au moins une source de synchronisation externe du processeur (10) est une source de synchronisation interne d'un autre processeur (10) appartenant au même équipement que le processeur (10) ou à un équipement différent, ou une source de synchronisation interne d'un dispositif d'affichage, ou encore une source de synchronisation d'un réseau avionique.

9. Système avionique comprenant un ensemble selon l'une quelconque des revendications 6 à 8.

## Patentansprüche

1. Vorrichtung (12) zur Überwachung der Ausführung einer Anwendung auf einem Prozessor (10), wobei die Vorrichtung umfasst:
- einen Eingang (20) zum Empfangen von Eingangsbefehlen von dem Prozessor (10), wobei jeder Eingangsbefehl ausgewählt ist aus: einem Rücksetzbefehl, einem Inhibierungsbefehl und einem Reaktivierungsbefehl,
- einen Ausgang (22) zum Senden eines Sanktionsbefehls für den Prozessor (10),
- einen Zeitzähler (24),
- ein Steuermodul (26) des Zeitzählers (24), wobei das Steuermodul (26) dazu konfiguriert ist, den Zeitzähler (24) am Ende eines Zeitraums mit vorbestimmter Dauer, der als Rücksetzperiode (Pᵢₙᵢₜ) bezeichnet wird, zurückzusetzen, wenn ein Rücksetzbefehl am Eingang (20) der Überwachungsvorrichtung (12) innerhalb eines Zeitfensters mit vorbestimmter Dauer, das als Rücksetzfenster (Fᵢₙᵢₜ) bezeichnet wird, empfangen wurde, und andernfalls einen Sanktionsbefehl für den Prozessor (10) zu erzeugen,
- ein Inhibierungsmodul (28) des Zeitzählers (24), wobei das Inhibierungsmodul (28) dazu konfiguriert ist, den Zeitzähler (24) beim Empfangen eines Inhibierungsbefehls am Eingang (20) der Überwachungsvorrichtung (12) zu inhibieren, und
- ein Reaktivierungsmodul (30) des Zeitzählers (24), wobei das Reaktivierungsmodul (30) dazu konfiguriert ist, den Zeitzähler (24) beim Empfangen eines Reaktivierungsbefehls am Eingang (20) der Überwachungsvorrichtung (12) zu reaktivieren,
wobei das Reaktivierungsmodul (30) ferner dazu konfiguriert ist, den Zeitzähler (24) zu reaktivieren, wenn die Inhibierungsdauer des Zeitzählers (24) strikt größer als eine maximale Inhibierungsdauer ist.

2. Vorrichtung (12) nach Anspruch 1, wobei das Inhibierungsmodul (28) dazu konfiguriert ist, den Zeitzähler (24) nur dann zu inhibieren, wenn die Anzahl der in einem gleitenden Zeitraum mit vorbestimmter Dauer empfangenen Inhibierungsbefehle kleiner oder gleich einer maximalen Anzahl ist.

3. Vorrichtung (12) nach Anspruch 2, wobei, wenn die Anzahl der in dem gleitenden Zeitraum empfangenen Inhibierungsbefehle strikt größer als die maximale Anzahl ist, das Steuermodul (26) dazu konfiguriert ist, einen Sanktionsbefehl für den Prozessor (10) zu erzeugen.

4. Vorrichtung (12) nach einem der Ansprüche 1 bis 3, wobei die Dauer des Rücksetzfensters (Fᵢₙᵢₜ) gleich der Dauer der Rücksetzzeitraum (Pᵢₙᵢₜ) ist.

5. Vorrichtung (12) nach einem der Ansprüche 1 bis 3, wobei die Dauer des Rücksetzfensters (Fᵢₙᵢₜ) strikt kleiner als die Dauer der Rücksetzzeitraum (Pᵢₙᵢₜ) ist, wobei vorteilhafterweise das Ende des Rücksetzfensters (Fᵢₙᵢₜ) gleich dem Ende der Rücksetzzeitraum (Pᵢₙᵢₜ) ist.

6. Anordnung, umfassend:
- einen Prozessor (10), der dazu konfiguriert ist, eine Anwendung auszuführen, und
- eine Vorrichtung zur Überwachung (12) der Ausführung der Anwendung auf dem Prozessor (10) nach einem der Ansprüche 1 bis 5.

7. Anordnung nach Anspruch 6, wobei der Prozessor (10) mit einem Betriebssystem in Wechselwirkung steht, wobei der Prozessor (10) dazu konfiguriert ist, zeitlich mit mindestens einer externen Synchronisationsquelle (Sₑₓₜ) synchronisiert zu werden, jedes Mal, wenn die aktuelle Synchronisationsquelle des Prozessors (10) durch eine externe Synchronisationsquelle (Sₑₓₜ) ersetzt wird, die sich von der aktuellen Synchronisationsquelle unterscheidet, wobei das Betriebssystem dazu konfiguriert ist, die von dem Prozessor ausgeführte(n) Anwendung(en) in den Ruhezustand zu versetzen, bis der Prozessor (10) sich erneut mit der genannten externen Synchronisationsquelle (Sₑₓₜ) synchronisiert hat, wobei das Betriebssystem ferner dazu konfiguriert ist, parallel zum Versetzen der Anwendung(en) in den Ruhezustand einen Inhibierungsbefehl an die Überwachungsvorrichtung (12) zu senden und einen Reaktivierungsbefehl an die Überwachungsvorrichtung (12) zu senden, sobald der Prozessor erneut mit der externen Synchronisationsquelle (Sₑₓₜ) synchronisiert ist.

8. Anordnung nach Anspruch 7, wobei mindestens eine externe Synchronisationsquelle des Prozessors (10) eine interne Synchronisationsquelle eines anderen Prozessors (10) ist, der zu demselben Gerät gehört wie der Prozessor (10) oder zu einernanderem Gerät gehört, oder eine interne Synchronisationsquelle einer Anzeigevorrichtung, oder auch eine Synchronisationsquelle eines Avioniknetzwerks ist.

9. Avioniksystem, umfassend eine Anordnung nach einem der Ansprüche 6 bis 8.

## Claims

1. A device (12) for monitoring the execution of an application on a processor (10), the device comprising:
- an input (20) for receiving input commands from the processor (10), each input command being chosen from: a reset command, an inhibition command and a reactivation command,
- an output (22) for sending a sanction command of the processor (10),
- a time counter (24),
- a control module (26) of the time counter (24), the control module (26) being configured to reset the time counter (24) at the end of a time period of predetermined duration, called reset period (Pᵢₙᵢₜ), if a reset command has been received at the input (20) of the monitoring device (12) in a time window of predetermined duration, called reset window (Fᵢₙᵢₜ), and to generate a sanction command of the processor (10) otherwise,
- an inhibition module (28) of the time counter (24), the inhibition module (28) being configured to inhibit the time counter (24) during the reception of an inhibition command at the input (20) of the monitoring device (12), and
- a reactivation module (30) of the time counter (24), the reactivation module (30) being configured to reactivate the time counter (24) during the reception of a reactivation command at the input (20) of the monitoring device (12),
the reactivation module (30) being further configured to reactivate the time counter (24) when the inhibition duration of the time counter (24) is strictly greater than a maximum inhibition duration.

2. The device (12) according to claim 1, wherein the inhibition module (28) is configured to inhibit the time counter (24) only when the number of inhibition commands received over a sliding period of predetermined duration is less than or equal to a maximum number.

3. The device (12) according to claim 2, wherein when the number of inhibition commands received over the sliding period is strictly greater than the maximum number, the control module (26) is configured to generate a sanction command of the processor (10).

4. The device (12) according to any one of claims 1 to 3, wherein the duration of the reset window (Fᵢₙᵢₜ) is equal to the duration of the reset period (Pᵢₙᵢₜ).

5. The device (12) according to any one of claims 1 to 3, wherein the duration of the reset window (Fᵢₙᵢₜ) is strictly less than the duration of the reset period (Pᵢₙᵢₜ), advantageously the end of the reset window (Fᵢₙᵢₜ) being equal to the end of the reset period (Pᵢₙᵢₜ).

6. An assembly comprising:
- a processor (10) configured to execute an application, and
- a device for monitoring (12) the execution of the application on the processor (10) according to any one of claims 1 to 5.

7. The assembly according to claim 6, wherein the processor (10) interacts with an operating system, the processor (10) being configured to be synchronized over time on at least one external synchronization source (Sₑₓₜ), each time the current synchronization source of the processor (10) is replaced by an external synchronization source (Sₑₓₜ) different from the current synchronization source, the operating system being configured to place the application(s) executed by the processor in standby until the processor (10) resynchronizes itself on said external synchronization source (Sₑₓₜ), the operating system further being configured to send an inhibition command to the monitoring device (12) in parallel with the placement in standby of the application(s) and to send a reactivation command to the monitoring device (12) once the processor is resynchronized on the external synchronization source (Sₑₓₜ).

8. The assembly according to claim 7, wherein at least one external synchronization source of the processor (10) is an internal synchronization source of another processor (10) belonging to the same equipment as the processor (10) or to different equipment, or an internal synchronization source of a display device, or a synchronization source of an avionics network.

9. An avionics system comprising an assembly according to any one of claims 7 to 8.
